# EUROPEAN PATENT SPECIFICATION

(11) **EP 0 581 267 B1**
(45) Date of publication and mention of the grant of the patent: **04.03.1998**
(21) Application number: 93112065.3
(22) Date of filing: 28.07.1993
(51) Int. Cl.: A23L 1/325, C11B 1/14, C11B 3/00

(54) **Process for producing docosahexaenoic acid-enriched fish meat food**
Verfahren zur Erzeugung von Nahrungsmitteln auf Basis von mit Docosahexaensäure angereichertem Fischfleisch
Procédé pour la production de produits alimentaires à base de chair de poisson, enrichie en acide docosahexaénoique

(30) Priority: 29.07.1992 JP 202600/92
(43) Date of publication of application: 02.02.1994
(73) Proprietor: MARUHA CORPORATION, Chiyoda-ku Tokyo (JP)
(72) Inventor: Maruyama, Kazuaki, c/o Taiyo Fishery Co.,Ltd., Tsukuba-shi, Ibarakiken (JP)
(74) Representative: Grünecker, Kinkeldey, Stockmair & Schwanhäusser Anwaltssozietät

(56) References cited:
- GB-A- 2 226 044
- DATABASE WPI Week 8841, Derwent Publications Ltd., London, GB; AN 88-288403
- DATABASE WPI Week 9003, Derwent Publications Ltd., London, GB; AN 90-019980
- DATABASE WPI Week 9217, Derwent Publications Ltd., London, GB; AN 92-136857
- DATABASE WPI Week 9002, Derwent Publications Ltd., London, GB; AN 90-011028
- DATABASE WPI Week 8710, Derwent Publications Ltd., London, GB; AN 87-070666
- DATABASE WPI Week 8833, Derwent Publications Ltd., London, GB; AN 88-232607
- DATABASE WPI Week 9218, Derwent Publications Ltd., London, GB; AN 92-147271
- FOOD SCIENCE & TECHNOLOGY ABSTRACTS no. 92-05-N0051 (92028132) YAZAWA, K. ET AL. : "Physiological activity of docosahexaenoic acid"
- Flavor Research, Recent advance, Marcel Dekker Inc., New York and Basel (1981), pages 23-25

## Description

This invention relates to a process for producing a docosahexaenoic acid-enriched fish meat food, for example, fresh fish meat such as minced tuna, canned tuna or bonito pickled in oil and a retort pouch fish meat food.

It has been known that docosahexaenoic acid (hereinafter referred to simply as DHA) is effective in preventing and treating thrombosis like eicosapentaenoic acid (hereinafter referred to simply as EPA). Recently, it has been further proved that DHA has physiological activities of improving cerebral functions and suppressing amblyopia and is effective on diseases in the central nervous system.

DHA, which exerts highly important physiological activities as described above, occurs in a large amount exclusively in fishes and shellfishes. Thus there is no practically available method for supplying DHA except for taking fishes and shellfishes.

On the other hand, it has been a practice in the art to add fish oils to foods. Among the fish oils, sardine oil and cod-liver oil have been widely employed in general. These fish oils are used mainly in the form of hardened fish oils as the material for producing margarine and shortening or in the form of an EPA concentrate as a supplementary health food. Further, they are used as feed oils in fish farming.

Although these fish oils contain a large amount (approximately 12 to 20 %) of EPA, the DHA content therein amounts to only about 5 to 12 %. It is therefore impossible to obtain a so-called DHA oil containing DHA at a high concentration from these fish oils.

In 1990, Yazawa et al. investigated fatty acid compositions in an orbital fat existing around the eyeballs of various fishes. As a result, they have clarified that DHA is contained at a high concentration in the orbital fat of large, blue-backed fishes such as tuna and bonito, whereby the usefulness of the orbital fat as a raw material for DHA has come to be pointed out.

The use of the orbital oil of the above-mentioned fishes such as tuna and bonito makes it possible to extract a fish oil containing a high concentration (25 to 40 %) of DHA and having a characteristic fatty acid composition.

The fish oil extracted from the above-mentioned orbital oil is useful in the development of DHA-enriched foods containing a large amount of DHA. However, an unrefined oil obtained by merely extracting the orbital oil has a strong fishy smell, which makes it impossible to add the unrefined oil as such to a food even though the food might exert a large masking effect thereon.

It has been reported as a prior art that a fish meat having no offensive smell can be obtained by blending an orbital oil obtained by extracting milled fish orbital fat tissues with fish meat (refer to Japanese Patent Laid-Open NO. 167764/1988). However there has not been any report so far on the production of a fish meat food by using an orbital oil obtained by extracting tuna and bonito orbital tissues with hot water.

Accordingly, it is an object of the present invention to provide a process for producing a fish meat food which contains a fish oil obtained from fish orbital oil and being rich in DHA and has a good flavor without showing any fishy smell.

In order to achieve the above-mentioned object, the present inventors have conducted extensive studies. As a result, they have successfully found out that when a highly refined orbital oil obtained by degumming and deacidifying orbital oil extracted from fish and then deodorising by, for example, steam distillation is added to a fish meat, the resulting fish meat shows a good flavor which can be sustained even after prolonged storage without accompanied by the evolution of any offensive smell.

The present invention provides a process for producing a docosahexaenoic acid-enriched fish meat food comprising the steps of
(a) preparing a refined fish oil by
   (i) separating the heads from the edible parts of bonito or tuna;
   (ii) extracting an orbital oil containing 20 to 50% docosahexaenoic acid with hot water;
   (iii) refining the orbital oil by degumming and alkali-refining;
   (iv) deodorizing the extracted orbital oil by molecular distillation or steam distillation; and
(b) adding 0.1 to 20 parts by weight of the refined and deodorized orbital oil to 100 parts by weight of fresh fish meat or canned fish meat pickled in oil or a retort pouch fish meat food.

The process of the present invention for producing a fish meat food makes it possible to produce a fish meat food which contains a fish oil obtained from fish orbital oil and being rich in DHA, has a good flavor without showing any fishy smell and therefore tastes good. This fish meat food is useful for supplying DHA.

Now the process for producing the fish meat food of the present invention will be described by referring to one embodiment of a process for producing a fish meat food with the use of a fresh fish meat food as the fish meat.

First, there is effected the step of preparing a refined fish oil by separating the heads from the edible parts of fish bodies, extracting an orbital oil containing 20 to 50% of docosahexaenoic acid (DHA) and existing around the eyeballs in the heads with hot water, refining the orbital oil by degumming and alkali-refining and deodorizing the extracted orbital oil.

Bonito and tuna fish bodies are used for producing the above-mentioned orbital oil.

The orbital oil is obtained by extracting from around the eyeballs in the fish heads with hot water, and contains from 20 to 50 % of DHA.

The conditions for the hot water extraction of the orbital oil are as follows. In usual, the temperature of the hot water preferably ranges from 40 to 99 °C, still preferably from 70 to 99 °C and the extraction time preferably ranges from 10 to 500 minutes, still preferably from 10 to 180 minutes.

The extracted orbital oil is deodorized by molecular distillation or steam distillation, and it is particularly preferable to employ steam distillation therefor.

The orbital oil is refined by degumming and alkali refining by known methods prior to the deodorization.

Subsequently, the step of adding the refined fish oil to fresh fish meat is effected to thereby give a fish meat food wherein fresh fish meat is used as the fish meat.

As examples of the fresh fish meat, fresh tuna, minced tuna, fresh bonito, lightly roasted bonito, minced saurel and minced sardine may be cited.

The refined fish oil as described above may be added to the fresh fish meat in a conventional manner. When the fish oil is added in a smaller amount to the fresh fish meat, the evolution of an offensive odor can be more effectively suppressed and a better masking effect exerted by the fish meat can be expected. The amount of the refined fish oil to be added varies depending on the type and form of the desired fish meat food. In general, it is added in an amount from 0.1 to 20 parts by weight.

When more than 100 parts by weight of the refined fish oil is added, the masking effect of the fish meat can be hardly achieved.

The form of the fresh fish meat food produced by the process of the present invention for producing a fish meat food with the use of fresh fish meat as the fish meat is not particularly restricted. For example, minced tuna, lightly roasted bonito, minced saurel and minced sardine can be prepared in accordance with the process of the present invention.

When canned fish meat pickled in oil or a retort pouch fish meat food is to be produced by the process of the present invention, the above-mentioned procedure for producing the fish meat food of the present invention by using fresh fish meat as the fish meat may be repeated except that the refined fish oil is added to canned fish meat pickled in oil or a retort pouch fish meat food. Examples of the fish meat to be used as the raw material for producing the canned fish meat pickled in oil or retort pouch fish meat food include tuna flakes, bonito flakes, tuna solids, bonito solids, salmon flakes and salmon solids.

Regarding the constitution other than those as described above, the process of the present invention for producing a fish meat food can be effected by optionally employing the same constitution as those employed in the conventional processes for producing fish meat foods.

The orbital oil containing 20 to 50% of DHA to be used in the process of the present invention for producing a fish meat food is extracted with hot water refined by degumming and alkali refining, dedorized and then added to fresh fish meat, canned fish meat pickled in oil or retort pouch fish meat food, whereby its fishy smell can be masked over a long period of time. Accordingly, the process of the present invention for producing a fish meat food makes it possible to give a DHA-enriched fish meat food having a good flavor.

To further illustrate the process of the present invention for producing a fish meat food in greater detail, the following Examples will be given.

### Production Example [production of refined fish oil (refined and deodorised orbital oil)]

From tuna heads, orbital fat tissue was taken out and 10 kg of the tissue was thus collected. 20 l of water was added to a steam jacket with a capacity of 50 kg and heated to 90 °C. The orbital fat collected above was fed into the steam jacket and extracted with hot water (extraction by cooking in hot water) for 30 minutes to obtain 5.4 kg of an oily phase as the upper layer.

The oil thus extracted with hot water (extracted by cooking in hot water) was degummed and deacidified in a conventional manner to thereby give 5.1 kg of a refined orbital oil.

5.1 kg of the refined orbital oil thus obtained was fed into a steam still. After adjusting the volume of blown steam to 5 % by weight based on the refined orbital oil thus fed, the refined orbital oil was distilled in a vacuum of 10 mmHg at a distillation temperature of 200 °C for 2 hours to obtain 5.03 kg of refined and deodorized orbital oil having no smell.

Analysis on this refined and deodorized orbital oil indicated that it contained 27.6 % of DHA and 6.9 % of EPA and had a peroxide value of 0 and an acid value of 0.09.

### Test Example [test on masking effect by fresh tuna]

The masking effects by fresh fish meat were examined on the refined fish oil (refined and deodorized orbital oil) prepared in the above Production Example and unrefined orbital oil prepared by extracting without using hot water and effecting no refining treatment such as deodorization.

50 g of the refined and deodorized orbital oil was added to 50 g of fresh tuna and mixed under stirring until a homogeneous mixture is obtained. Then the flavor of the mixture was organoleptically examined immediately after mixing and after allowing to stand at 20 °C for 5 hours. The unrefined orbital oil was treated in the same manner as the one described above and then the flavor of the mixture was examined. As a control, 50 g of the refined and deodorized orbital oil was further added to 50 g of fresh beef and treated in the same manner as the one described above and the flavor of the mixture was examined. The results will be given hereinbelow.

In the results given below, the flavor of the mixture is expressed in "+" (a noticeable fish oil smell), "±" (a slight fish oil smell) or "-" (no fish oil smell).

| | Immediately after mixing | After 5 hours (20 °C) |
|---|---|---|
| Unrefined orbital oil + fresh tuna | ± | + |
| Refined and deodorized orbital oil + fresh tuna | - | - |
| Refined and deodorized orbital oil + fresh beef | - | + |

When the unrefined fish oil was held in the mouth as such, a seriously offensive smell made it far beyond good to eat.

As the above results show, when the unrefined fish oil was mixed with the same amount of fresh tuna, the offensive smell was relieved and the fish meat exerted a masking effect. After storing for 5 hours, however, the offensive smell became noticeable. Further, a slight fish oil smell was felt immediately after mixing.

In contrast, when the refined and deodorized orbital oil was mixed with the same amount of fresh tuna, no offensive smell was felt not only immediately after mixing but also after storing for 5 hours. Thus it was confirmed that the use of the refined and deodorized orbital oil resulted in a remarkable improvement in the flavor and the masking effect of the fresh tuna was maintained over a long period of time.

When mixed with the refined and deodorized orbital oil, the fresh beef tested as a control showed a fish oil smell 5 hours after mixing. Namely, it was inferior to fresh tuna in masking effect.

Thus it has been clarified that fresh tuna is excellent in the masking effect on orbital oil and the addition of the refined and deodorized orbital oil makes it possible to maintain this masking effect over a long period of time.

### Example 1 (preparation of minced tuna)

### [Composition]

| | |
|---|---|
| fresh tuna | 90 g |
| refined and deodorized orbital oil*¹ | 7.5 g |
| tocopherol | 0.02 g |
| seasoning | 2.18 g |
| ascorbic acid | 0.3 g |

| | |
|---|---|
| *1: the refined fish oil as produced in the above Production | |

### Example (refined and deodorized orbital oil).

Minced tuna was prepared by way of trial by thoroughly mixing the above components.

When tasted, the product had a good flavor and no offensive smell was noticed. Thus it was found out that DHA-enriched minced tuna could be prepared by adding the refined and deodorized orbital oil produced in the above Production Example.

### Example 2 (preparation of canned tuna pickled in oil)

### [Composition]

| | |
|---|---|
| tuna (flakes) | 65 g |
| vegetable soup (broth) | 12 g |
| soybean oil | 17 g |
| orbital oil*¹ | 6 g |

| | |
|---|---|
| *1: the refined fish oil as produced in the above Production | |

### Example (refined and deodorized orbital oil).

Canned tuna pickled in oil was prepared by way of trial by mixing the above components.

When tasted, the product showed no offensive fishy smell not only immediately after the preparation but also after storing at 37 °C for 3 months. Thus it was found out that canned DHA-enriched tuna pickled in oil could be prepared by adding the refined and deodorized orbital oil produced in the above Production Example and the canned product thus obtained sustained an excellent flavor after storing at room temperature for a long time.

### Example 3 [preparation of bonito flakes pickled in oil (retort pouch food)]

### [Composition]

| | |
|---|---|
| bonito flakes | 70 g |
| soybean oil | 10 g |
| orbital oil*¹ | 10 g |
| seasoning liquor | 10 g |

| | |
|---|---|
| *1: the refined fish oil as produced in the above Production | |

### Example (refined and deodorized orbital oil).

A retort pouch food of bonito flakes pickled in oil was prepared by way of trial by mixing the above components.

Similar to the canned tuna pickled in oil as prepared in the above Example 2, this product tasted good after storing for 3 months. Thus it was found out that canned DHA-enriched bonito flakes pickled in oil (retort pouch food) could be prepared by adding the refined and deodorized orbital oil produced in the above Production Example.

## Claims

1. A process for producing a docosahexaenoic acid-enriched fish meat food comprising the steps of
(a) preparing a refined fish oil by
(i) separating the heads from the edible parts of bonito or tuna;
(ii) extracting an orbital oil containing 20 to 50% docosahexaenoic acid with hot water;
(iii) refining the orbital oil by degumming and alkali-refining;
(iv) deodorizing the extracted orbital oil by molecular distillation or steam distillation; and
(b) adding 0.1 to 20 parts by weight of the refined and deodorized orbital oil to 100 parts by weight of fresh fish meat or canned fish meat pickled in oil or a retort pouch fish meat food.

## Patentansprüche

1. Verfahren zur Herstellung eines Nahrungsmittels auf Basis von mit Docosahexaensäure angereichertem Fischfleisch, welches die Schritte umfaßt:
(a) Herstellung eines raffinierten Fischöls durch
(i) Abtrennen der Köpfe von den eßbaren Teilen eines Bonitos oder eines Thunfisches;
(ii) Extrahieren eines Augenhöhlenöls, welches 20 bis 50 % Docosahexaensäure enthält, mit heißem Wasser;
(iii) Raffinieren des Augenhöhlenöls durch Entschleimen und Alkaliraffinierung;
(iv) Desodorieren des extrahierten Augenhöhlenöls durch Molekulardestillation oder Dampfdestillation;
und
(b) Zugabe von 0,1 bis 20 Gewichtsteilen des raffinierten und desodorierten Augenhöhlenöls zu 100 Gewichtsteilen von frischem Fischfleisch oder in Öl eingelegtem Dosenfischfleisch oder eines Fischfleischnahrungsmittels in einem sterilisierbaren Beutel.

## Revendications

1. Procédé pour la production de produits alimentaires à base de chair de poisson enrichie en acide docosahexaénoïque, comprenant les étapes
(a) de préparation d'une huile de poisson raffinée en
(i) séparant les têtes des parties comestibles de bonite ou de thon ;
(ii) extrayant une huile orbitaire contenant 20 à 50 % d'acide docosahexaénoïque avec de l'eau chaude ;
(iii) raffinant l'huile orbitaire par démucilagination et raffinage par une base ;
(iv) désodorisant l'huile orbitaire extraite par distillation moléculaire ou distillation à la vapeur ; et
(b) d'ajout de 0,1 à 20 parties en poids de l'huile orbitaire raffinée et désodorisée à 100 parties en poids de chair de poisson fraîche ou de chair de poisson en boîte marinée dans de l'huile ou d'un produit alimentaire à base de chair de poisson en sachet autoclavable.
